# EUROPÄISCHE PATENTSCHRIFT

(11) **EP 3 387 504 B1**
(45) Veröffentlichungstag und Bekanntmachung des Hinweises auf die Patenterteilung: **02.06.2021**
(21) Anmeldenummer: 16810253.1
(22) Anmeldetag: 30.11.2016
(51) Int. Cl.: G05D 1/02

(54) **VERFAHREN ZUM BETREIBEN EINES SYSTEMS UND SYSTEM**
METHOD FOR OPERATING A SYSTEM AND SYSTEM
PROCÉDÉ DE FONCTIONNEMENT D'UN SYSTÈME ET SYSTÈME

(30) Priorität: 08.12.2015 DE 102015015770
(43) Veröffentlichungstag der Anmeldung: 17.10.2018
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÄFER, Thomas, 76689 Neuthard (DE); HUA, Zhidong, 76646 Bruchsal (DE)
(86) Internationale Anmeldenummer: PCT/EP2016/025157
(87) Internationale Veröffentlichungsnummer: WO 2017/097431

(56) Entgegenhaltungen:
- US-A1- 2006 079 997
- US-A1- 2013 282 168
- US-A1- 2015 088 373

## Beschreibung

Die Erfindung betrifft ein Verfahren zum Betreiben eines Systems und ein System.

Aus der DE 10 2013 001 358 B4 ist ein System für eine Anlage und ein Verfahren zum Betreiben eines solchen Systems bekannt.

Die DE 10 2009 043 060 A1 zeigt ein System von mobilen Robotern mit einer Basisstation,

Aus der US 2013/282168 A1 ist als nächstliegender Stand der Technik ein Verfahren zum Steuern der Bewegung beweglicher Träger bekannt.

Aus der US 2015/088373 A1 ist ein optisches Kommunizieren und ein Hinderniserkennen für autonome Fahrzeuge bekannt.

Aus der US 2006/079997 A1 ist ein Verfahren zur Clusterung einer Mehrzahl von Robotern bekannt.

Der Erfindung liegt daher die Aufgabe zugrunde, ein Verfahren zum Betreiben eines Systems und ein System weiterzubilden, wobei die Sicherheit verbessert werden soll.

Erfindungsgemäß wird die Aufgabe bei dem Verfahren zum Betreiben eines Systems nach den in Anspruch 1 angegebenen Merkmalen und bei dem System nach den in Anspruch 2 angegebenen Merkmalen gelöst.

Wichtige Merkmale der Erfindung bei dem Verfahren zum Betreiben, insbesondere zur Steuerung, eines Systems sind, dass das System Fahrzeuge, eine zentrale Steuerungseinheit und zumindest ein mittels eines bidirektionalen Kommunikationskanals mit der zentralen Steuerungseinheit verbundenes, stationär angeordnetes Sende-Empfangsmodul, aufweisend einen Sende-Raumbereich, insbesondere Sendekegel, aufweist,
wobei jedes Fahrzeug ein jeweiliges Sende-Empfangsmodul aufweist, insbesondere jeweils aufweisend einen jeweiligen Sende-Raumbereich zur bidirektionalen Kommunikation mit dem stationär angeordneten Sende-Empfangsmodul und/oder einem Fahrzeug,
wobei das jeweilige Sende-Empfangsmodul zumindest eine steuerbare Lichtquelle und einen Lichtsensor aufweist, insbesondere eine Lichtquelle von sichtbarem Licht und ein Lichtsensor für sichtbares Licht,
wobei die zentrale Steuerungseinheit mittels des stationär angeordneten Sende-Empfangsmoduls Fahraufträge an die Fahrzeuge sendet,
wobei ein in dem Sende-Raumbereich des stationär angeordneten Sende-Empfangsmoduls sich befindendes erstes Fahrzeug einen Fahrauftrag an ein außerhalb des Sende-Raumbereichs des stationär angeordneten Sende-Empfangsmoduls sich befindendes zweites Fahrzeug weiterleitet,
wobei das zweite Fahrzeug Daten, insbesondere Statusinformationen, mittels des ersten Fahrzeuges und des stationär angeordneten Sende-Empfangsmoduls an die zentrale Steuerungseinheit sendet.

Von Vorteil ist dabei, dass zur Beleuchtung vorgesehene Lichtquellen zur Datenübertragung verwendbar sind. Dabei ist die Anzahl der stationären Lichtquellen reduzierbar bei einer hohen Sendereichweite mittels der Fahrzeuge.

Hindernisse für das gesendete Licht des stationär angeordneten Sende-Empfangsmoduls sind mittels der Fahrzeuge umgehbar.

Sichtbares Licht ist mittels einfacher kostengünstiger Lichtquellen, insbesondere LED, in einfacher Art und Weise erzeugbar und mittels einfacher kostengünstiger Sensoren, insbesondere Fotodioden oder Fototransistoren, in einfacher Art und Weise detektierbar.

Erfindungsgemäß weist jedes Fahrzeug ein Positionsbestimmungsmittel auf, insbesondere aufweisend einen odometrischen Sensor und/oder einen GPS-Sensor, und sendet seine vom Positionsbestimmungsmittel bestimmten Positionsdaten mittels des stationär angeordneten Sende-Empfangsmoduls und/oder des ersten Fahrzeugs an die zentrale Steuerungseinheit. Von Vorteil ist dabei, dass die Position jedes Fahrzeuges unabhängig von der zentralen Steuerungseinheit bestimmbar ist. Vorteilhafterweise ist so die Position eines Fahrzeuges außerhalb der Sende-Raumbereiche des stationär angeordneten Sende-Empfangsmoduls und der Sende-Empfangsmodule der anderen Fahrzeuge bestimmbar. Somit ist die Reichweite des Systems erhöht.

Erfindungsgemäß bestimmt jedes Fahrzeug die jeweils zu sich selbst relativen Positionsdaten von in seinem Sende-Raumbereich sich befindenden Fahrzeugen und sendet diese bestimmten relativen Positionsdaten mittels des stationär angeordneten Sende-Empfangsmoduls an die zentrale Steuerungseinheit. Von Vorteil ist dabei, dass das Kollisionsrisiko unter den Fahrzeugen reduzierbar ist. Die zentrale Steuerungseinheit berücksichtigt bei der Erstellung der Fahraufträge die relativen Positionen der Fahrzeuge und berechnet die Fahrtrouten so, dass die Fahrzeuge nicht kollidieren. Somit ist die Sicherheit verbessert.

Erfindungsgemäß bestimmt die zentrale Steuerungseinheit aus den Positionsdaten jedes Fahrzeugs, den relativen Positionsdaten der Fahrzeuge und der Position des stationär angeordneten Sende-Empfangsmoduls Positionskorrekturen und sendet diese an die Fahrzeuge. Von Vorteil ist dabei, dass die Genauigkeit der mittels des jeweiligen Positionsbestimmungsmittels bestimmten Position verbessert ist, da die Positionskorrekturen zur Bestimmung von Referenzpositionen verwendbar sind.

Erfindungsgemäß weist der Fahrauftrag für ein jeweiliges Fahrzeug
- ein Fahrziel und/oder
- einen Startpunkt und/oder
- eine Fahrroute und/oder
- eine Geschwindigkeit und/oder
- eine Freigabe für einen Streckenabschnitt der Fahrroute und/oder
- eine maximale Fahrzeit auf.

Von Vorteil ist dabei, dass der Fahrauftrag für ein jeweiliges Fahrzeug von der zentralen Steuerungseinheit genau vorgegeben ist. Vorteilhafterweise ist die Sollposition des Fahrzeugs für jeden Zeitpunkt vorgegeben. Somit ist das Fahrzeug im Fehlerfall in einfacher Art und Weise auffindbar.

Erfindungsgemäß kehrt ein Fahrzeug, das am Fahrziel seines Fahrauftrags außerhalb der Sende-Raumbereiche aller anderen Fahrzeuge und des stationär angeordneten Sende-Empfangsmoduls sich befindet, selbsttätig zu dem Startpunkt seines Fahrauftrags zurück. Von Vorteil ist dabei, dass die Reichweite des Systems vergrößert ist ohne die Anzahl der Fahrzeuge oder die Anzahl der stationär angeordneten Sende-Empfangsmodule zu erhöhen. Vorteilhafterweise ist es ermöglicht, dass ein Fahrzeug aus einem das System aufnehmenden Gebäude herausfährt und nach Bearbeitung seines Fahrauftrags selbsttätig zurückkehrt. Dabei benötigt das Fahrzeug keinen zusätzlichen Fahrauftrag für seine Rückkehr. Vorteilhafterweise fährt das Fahrzeug in umgekehrter Richtung seines vorherigen Fahrauftrags.

Erfindungsgemäß wird die mittels des Positionsbestimmungsmittels jeweils aktuell bestimmte Istposition des Fahrzeugs auf eine jeweils gemäß Fahrroute aktuelle Sollposition hin geregelt. Von Vorteil ist dabei, dass das Fahrzeug keinen zusätzlichen Fahrauftrag für seine Rückkehr benötigt. Vorteilhafterweise fährt das Fahrzeug in umgekehrter Richtung seines vorherigen Fahrauftrags.

Erfindungsgemäß sendet, sobald ein Fahrzeug sich länger als die vorgegebene maximale Fahrzeit seines Fahrauftrags außerhalb der Sende-Raumbereiche aller anderen Fahrzeuge und des stationär angeordneten Sende-Empfangsmoduls aufhält, die zentrale Steuerungseinheit einen Fahrauftrag, aufweisend eine zu dem Fahrauftrag des Fahrzeugs identische Fahrroute, an ein weiteres Fahrzeug, wobei das weitere Fahrzeug nach Aufbau einer Kommunikationsverbindung mit dem Fahrzeug, die Statusinformationen des Fahrzeugs empfängt, speichert, zurück zum Startpunkt des Fahrauftrags des weiteren Fahrzeugs fährt und die Statusinformationen des Fahrzeugs an die zentrale Steuerungseinheit sendet. Von Vorteil ist dabei, dass Fahrzeuge im Fehlerfall auffindbar sind. Vorteilhafterweise sind die Statusinformationen von der zentralen Steuerungseinheit auswertbar und das Fahrzeug ist von anderen Fahrzeugen bergbar und/oder mit einem neuen Fahrauftrag beauftragbar. Somit ist die Sicherheit verbessert.

Bei einer vorteilhaften Ausgestaltung empfängt das zweite Fahrzeug einen Fahrauftrag von dem ersten Fahrzeug und leitet diesen Fahrauftrag an ein weiteres Fahrzeug weiter. Von Vorteil ist dabei, dass Fahraufträge über mehrere Fahrzeuge weiterleitbar sind. Vorteilhafterweise sind die Fahraufträge aller Fahrzeuge in jedem Fahrzeug abspeicherbar, so dass jedes Fahrzeug von jedem anderen Fahrzeug auffindbar ist anhand seines Fahrauftrags.

Bei einer vorteilhaften Ausgestaltung speichert das zweite Fahrzeug einen Fahrauftrag und leitet ihn zeitverzögert weiter. Von Vorteil ist dabei, dass die Reichweite des Systems verbessert ist.

Erfindungsgemäß empfängt das zweite Fahrzeug einen ersten und einen zweiten Fahrauftrag, wobei das zweite Fahrzeug den ersten Fahrauftrag ausführt und den zweiten Fahrauftrag speichert, wobei das zweite Fahrzeug nach Aufbau einer Kommunikationsverbindung mit dem weiteren Fahrzeug den zweiten Fahrauftrag an das weitere Fahrzeug sendet. Von Vorteil ist dabei, dass das zweite Fahrzeug mittels des ersten Fahrauftrags zu dem weiteren Fahrzeug schickbar ist, um dem weiteren Fahrzeug den zweiten Fahrauftrag zu übergeben.

Wichtige Merkmale der Erfindung bei dem System, insbesondere zur Durchführung eines Verfahrens wie zuvor beschrieben beziehungsweise nach einem der auf das System gerichteten Ansprüche, sind, dass das System Fahrzeuge und zumindest ein stationär angeordnetes Sende-Empfangsmodul, aufweisend einen Sende-Raumbereich, insbesondere Sendekegel, aufweist, wobei jedes Fahrzeug ein jeweiliges erstes Sende-Empfangsmodul, ein jeweiliges zweites Sende-Empfangsmodul und ein jeweiliges Positionsbestimmungsmittel, insbesondere aufweisend einen odometrischen Sensor und/oder einen GPS-Sensor, und/oder einen jeweiligen Abstandssensor, insbesondere einen Radarsensor und/oder einen Ultraschallsensor, aufweist, wobei das jeweilige Sende-Empfangsmodul zumindest eine steuerbare Lichtquelle und einen Lichtsensor aufweist, insbesondere eine Lichtquelle von sichtbarem Licht und ein Lichtsensor für sichtbares Licht, wobei jedes Fahrzeug mittels des jeweiligen ersten Sende-Empfangsmoduls zur bidirektionalen Kommunikation mit dem stationären Sende-Empfangsmodul eingerichtet ist und mittels des jeweiligen zweiten Sende-Empfangsmodul zur bidirektionalen Kommunikation mit den jeweiligen anderen Fahrzeugen mittels deren jeweiligen zweiten Sende-Empfangsmoduls eingerichtet ist. Von Vorteil ist dabei, dass zur Beleuchtung vorgesehene Lichtquellen zur Datenübertragung verwendbar sind. Dabei ist die Anzahl der stationären Lichtquellen reduzierbar bei einer hohen Sendereichweite mittels der Fahrzeuge,

Hindernisse für das gesendete Licht des stationär angeordneten Sende-Empfangsmoduls sind mittels der Fahrzeuge umgehbar.

Sichtbares Licht ist mittels einfacher kostengünstiger Lichtquellen, insbesondere LED, in einfacher Art und Weise erzeugbar und mittels einfacher kostengünstiger Sensoren, insbesondere Fotodioden oder Fototransistoren, in einfacher Art und Weise detektierbar.

Bei einer vorteilhaften Ausgestaltung weist das System eine zentrale Steuerungseinheit auf zur Steuerung der Fahrzeuge, wobei die zentrale Steuerungseinheit mittels zumindest eines bidirektionalen Kommunikationskanals mit dem stationär angeordneten Sende-Empfangsmodul verbunden ist, wobei die zentrale Steuerungseinheit zum Senden von Fahraufträgen mittels des stationär angeordneten Sende-Empfangsmoduls an ein jeweiliges Fahrzeug eingerichtet ist. Von Vorteil ist dabei, dass mittels einer einzigen zentralen Steuerungseinheit alle Fahrzeuge des Systems ansteuerbar sind. Somit ist das Kollisionsrisiko reduzierbar, da alle Fahrzeuge zentral steuerbar sind und alle Fahraufträge miteinander abstimmbar sind.

Bei einer vorteilhaften Ausgestaltung weist jedes Fahrzeug einen Speicher auf, in dem Positionsdaten des stationären Sende-Empfangsmoduls und/oder jeweilige Identifikationsinformationen und/oder Positionsdaten der jeweiligen Fahrzeuge gespeichert sind. Von Vorteil ist dabei, dass mittels der Fahrzeuge Positionsdaten übergebbar sind, insbesondere zeitverzögert übergebbar. Diese Positionsdaten sind als Referenzpunkte für die Positionsbestimmung der Fahrzeuge mittels Positionsbestimmungsmittel verwendbar. Somit ist die Genauigkeit der Positionsbestimmung verbessert.

Bei einer vorteilhaften Ausgestaltung ist der Speicher des jeweiligen Fahrzeuges eingerichtet, Fahraufträge für ein weiteres Fahrzeug zu speichern. Von Vorteil ist dabei, dass mittels der Fahrzeuge Fahraufträge zeitverzögert übergebbar sind.

Bei einer vorteilhaften Ausgestaltung ist das stationär angeordnete Sende-Empfangsmodul oberhalb der Fahrzeuge angeordnet. Von Vorteil ist dabei, dass die Datenübertragung in vertikaler Richtung ausführbar ist, wobei in dieser Richtung weniger Hindernisse für Licht vorhanden sind.

Bei einer vorteilhaften Ausgestaltung ist das jeweilige erste Sende-Empfangsmodul eines jeweiligen Fahrzeuges zu dem stationär angeordneten Sende-Empfangsmodul ausgerichtet auf dem jeweiligen Fahrzeug angeordnet. Von Vorteil ist dabei, dass die Datenübertragung in vertikaler Richtung ausführbar ist, wobei in dieser Richtung weniger Hindernisse für Licht vorhanden sind.

Bei einer vorteilhaften Ausgestaltung weist das System mehrere voneinander beabstandete stationär angeordnete Sende-Empfangsmodule auf, insbesondere wobei die Sende-Raumbereiche der stationär angeordneten Sende-Empfangsmodule voneinander beabstandet sind, wobei die stationär angeordneten Sende-Empfangsmodule jeweils mit der zentralen Steuerungseinheit zumindest über einen bidirektionalen Kommunikationskanal verbunden sind. Von Vorteil ist dabei, dass die Übertragung der Daten und/oder Fahraufträge beschleunigbar ist, indem die Fahrstrecken der Fahrzeuge zu den stationären Sende-Empfangsmodulen verkürzbar sind.

Vorteilhafterweise fungieren die stationär angeordneten Sende-Empfangsmodule als Referenzpunkte für die Positionsbestimmung der Fahrzeuge mittels Positionsbestimmungsmittel. Somit ist die Genauigkeit der Positionsbestimmung verbessert.

Bei einer vorteilhaften Ausgestaltung weist ein jeweiliges Fahrzeug zumindest ein drittes Sende-Empfangsmodul auf, wobei das jeweilige dritte Sende-Empfangsmodul zur Kommunikation mit dem jeweiligen zweiten und/oder dritten Sende-Empfangsmodul der anderen Fahrzeuge eingerichtet ist. Von Vorteil ist dabei, dass der Sende-Raumbereich des jeweiligen Fahrzeuges vergrößerbar ist.

Bei einer vorteilhaften Ausgestaltung überdecken der Sende-Raumbereich des jeweiligen zweiten Sende-Empfangsmoduls und der Sende-Raumbereich des jeweiligen dritten Sende-Empfangsmoduls gemeinsam einen größeren Raumbereich als der zweite oder dritte Sende-Raumbereich. Von Vorteil ist dabei, dass der Sende-Raumbereich des Fahrzeuges vergrößerbar ist.

Bei einer vorteilhaften Ausgestaltung ist das jeweilige zweite Sende-Empfangsmodul in Fahrtrichtung des jeweiligen Fahrzeugs ausgerichtet und das jeweilige dritte Sende-Empfangsmodul ist entgegen der Fahrtrichtung des jeweiligen Fahrzeugs ausgerichtet. Von Vorteil ist dabei, dass die Sende-Raumbereiche der Sende-Empfangsmodule eines jeweiligen Fahrzeuges einander minimal überlappen, Somit ist der gesamte Sende-Raumbereich des jeweiligen Fahrzeuges maximierbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

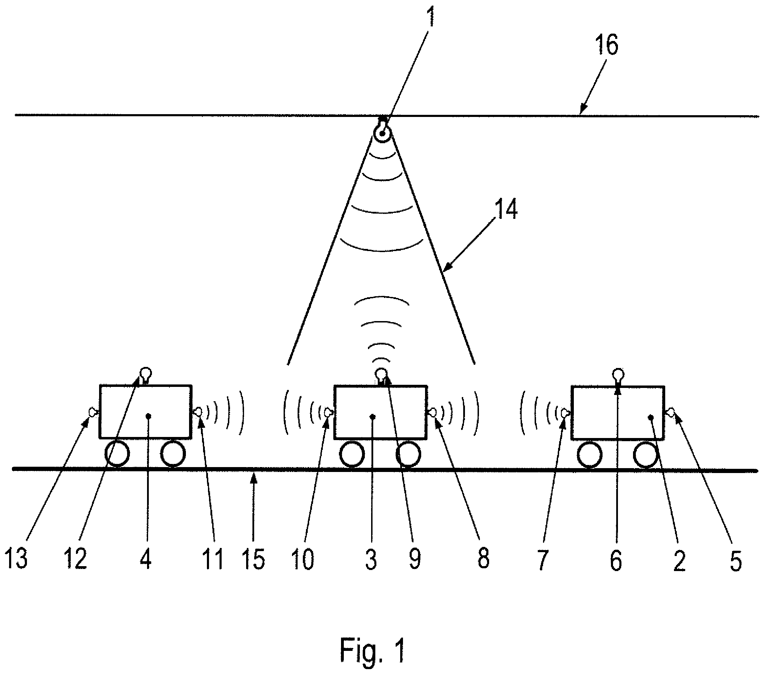

In der Figur 1 ist ein erfindungsgemäßes System von Fahrzeugen in Seitenansicht gezeichnet.

Das System weist zumindest ein stationär angeordnetes Sende-Empfangsmodul und Fahrzeuge, die jeweils zumindest zwei Sende-Empfangsmodule aufweisen, auf.

Vorzugsweise ist das System in einem Gebäude, insbesondere einer Lagerhalle oder Fertigungshalle angeordnet. Die Fahrzeuge (2, 3, 4) fahren auf einer Verfahrfläche 15 auf dem Boden des Gebäudes. Das stationär angeordnete Sende-Empfangsmodul ist oberhalb der Fahrzeuge (2, 3, 4) angeordnet, vorzugsweise an der Decke 16 des Gebäudes.

Bei einem weiteren nicht dargestellten Ausführungsbeispiel wird das System im Freien verwendet. Dabei ist das stationär angeordnete Sende-Empfangsmodul an einem Pfahl, insbesondere Laternenpfahl, befestigt und zum Boden, insbesondere zur Verfahrfläche 15, hin ausgerichtet angeordnet.

Bei einem weiteren Ausführungsbeispiel fahren die Fahrzeuge (2, 3, 4) sowohl im Freien als auch in einem Gebäude, dabei ist zumindest ein stationär angeordnetes Sende-Empfangsmodul in der Halle angeordnet und/oder zumindest ein stationär angeordnetes Sende-Empfangsmodul ist im Freien angeordnet.

Jedes der Sende-Empfangsmodule weist eine steuerbare Lichtquelle (1, 5, 6, 7, 8, 9, 10, 11, 12, 13) von sichtbarem Licht und einen Lichtsensor für sichtbares Licht auf. Jede Lichtquelle (1, 5, 6, 7, 8, 9, 10, 11, 12, 13) weist einen räumlich begrenzten Sende-Raumbereich, insbesondere einen Sendekegel 14, auf.

Somit ist das Gebäude mittels der stationär angeordneten Sende-Empfangseinheit beleuchtbar.

Das stationär angeordnete Sende-Empfangsmodul ist mittels eines bidirektionalen Kommunikationskanals mit einer zentralen Steuerungseinheit verbunden. Die zentrale Steuerungseinheit steuert das stationär angeordnete Sende-Empfangsmodul an, wodurch die Lichtquelle 1 des stationär angeordneten Sende-Empfangsmoduls angesteuert wird, ein Kommunikationssignal in Form von intensitäts-moduliertem Licht abzustrahlen,

Ein Lichtsensor eines Sende-Empfangsmoduls eines Fahrzeugs (2, 3, 4) detektiert das intensitäts-modulierte Licht und eine Signalelektronik des Sende-Empfangsmoduls wertet das empfangene Kommunikationssignal aus.

Die zentrale Steuerungseinheit sendet mittels des stationär angeordneten Sende-Empfangsmoduls Fahraufträge an die Fahrzeuge (2, 3, 4).

Ein Fahrauftrag für ein jeweiliges Fahrzeug (2, 3, 4) weist
- ein Fahrziel und/oder
- einen Startpunkt und/oder
- eine Fahrroute und/oder
- eine Geschwindigkeit und/oder
- eine Freigabe für einen Streckenabschnitt der Fahrroute und/oder
- eine maximale Fahrzeit auf.

Jedes Fahrzeug (2, 3, 4) weist ein erstes Sende-Empfangsmodul zur bidirektionalen Kommunikation mit dem stationären Sende-Empfangsmodul auf. Vorzugsweise ist das jeweilige erste Sende-Empfangsmodul an der Oberseite jedes Fahrzeuges (2, 3, 4) angeordnet.

Mittels des ersten Sende-Empfangsmoduls sendet das jeweilige Fahrzeug (2, 3, 4) Daten, insbesondere Statusdaten, an das stationär angeordnete Sende-Empfangsmodul, das die Daten an die zentrale Steuerungseinheit weiterleitet.

Jedes Fahrzeug (2, 3, 4) weist zumindest ein zweites Sende-Empfangsmodul auf zur bidirektionalen Kommunikation mit einem anderen Fahrzeug (2, 3, 4). Das jeweilige zweite Sende-Empfangsmodul ist quer zu einer Ebenennormalen der Verfahrfläche 15 ausgerichtet angeordnet. Vorzugsweise ist das jeweilige zweite Sende-Empfangsmodul in Fahrtrichtung des jeweiligen Fahrzeugs (2, 3, 4) ausgerichtet angeordnet.

Vorzugsweise weist jedes Fahrzeug (2, 3, 4) ein drittes Sende-Empfangsmodul auf, das derart angeordnet ist, dass der von dem Sende-Raumbereich des zweiten Sende-Empfangsmoduls und von dem Sende-Raumbereich des dritten Sende-Empfangsmoduls überdeckte Bereich größer ist als der Sende-Raumbereich des zweiten Sende-Empfangsmoduls und größer ist als der Sende-Raumbereich des dritten Sende-Empfangsmoduls. Vorzugsweise sind das jeweilige zweite Sende-Empfangsmodul und das jeweilige dritte Sende-Empfangsmodul einander entgegengesetzt angeordnet. Vorzugsweise ist das jeweilige dritte Sende-Empfangsmodul entgegen der Fahrtrichtung des jeweiligen Fahrzeuges (2, 3, 4) angeordnet.

Mittels des zweiten und/oder dritten Sende-Empfangsmoduls tauschen die Fahrzeuge (2, 3, 4) Statusdaten, wie zum Beispiel Positionsdaten und/oder Fehlermeldungen, und/oder Fahraufträge aus.

Somit ist ein Ad-hoc-Netzwerk geschaffen, das die Reichweite des Systems deutlich verbessert.

Jedes Fahrzeug (2, 3, 4) weist zumindest einen Abstandssensor, insbesondere einen Radarsensor und/oder einen Ultraschallsensor, und/oder ein Anti-Kollisionssystem auf.

Zusätzlich weist jedes Fahrzeug (2, 3, 4) ein Positionsbestimmungsmittel, insbesondere einen odometrischen Sensor und/oder einen GPS-Sensor, auf.

Mittels des odometrischen Sensors ist die Position des jeweiligen Fahrzeugs (2, 3, 4) relativ zu einem Startpunkt und/oder Initialisierungspunkt unabhängig von Referenzpunkten mittels eines Winkelsensors an einem Antrieb des jeweiligen Fahrzeugs (2, 3, 4) bestimmbar.

Mittels des GPS-Sensors ist die absolute Position des jeweiligen Fahrzeugs (2, 3, 4) bestimmbar. Vorzugsweise weist das System einen Referenzpunkt auf, dessen genaue Positionsdaten bekannt sind, so dass ein Vergleich der Positionsdaten des jeweiligen Fahrzeugs (2, 3, 4) mit den Positionsdaten des Referenzpunktes, sogenanntes Differential-GPS, die Bestimmung der absoluten Position des jeweiligen Fahrzeugs (2, 3, 4) mit hoher Genauigkeit auch in einem Gebäude ermöglicht.

Jedes Fahrzeug (2, 3, 4) weist eine Speichereinheit auf. Die Speichereinheit ist zur Speicherung von Fahraufträgen und/oder Statusdaten und/oder Identifikationsinformationen eingerichtet.

Ein in dem Sende-Raumbereich des stationär angeordneten Sende-Empfangsmodul sich befindendes erstes Fahrzeug 3 empfängt einen Fahrauftrag von der Steuereinheit und leitet diesen Fahrauftrag an ein außerhalb des Sende-Raumbereichs des stationär angeordneten Sende-Empfangsmoduls sich befindendes zweites Fahrzeug (2, 4) weiter.

Das in dem Sende-Raumbereich des stationär angeordneten Sende-Empfangsmoduls sich befindende erste Fahrzeug 3 empfängt Statusdaten des zweiten Fahrzeugs (2, 4), das im Sende-Raumbereich des zweiten und/oder dritten Sende-Empfangsmoduls des ersten Fahrzeugs 3 sich befindet. Das erste Fahrzeug 3 leitet die Statusdaten des zweiten Fahrzeugs (2, 4) mittels seines ersten Sende-Empfangsmoduls und des stationär angeordneten Sende-Empfangsmoduls an die zentrale Steuerungseinheit weiter.

Jedes Fahrzeug (2, 3, 4) ermittelt die relativen Positionsdaten von in dem jeweiligen Sende-Raumbereich seines zweiten und/oder dritten Sende-Empfangsmoduls sich befindenden Fahrzeugen (2, 3, 4) relativ zu seiner eigenen Position und leitet diese Positionsdaten mittels des stationär angeordneten Sende-Empfangsmoduls und/oder eines Sende-Empfangsmoduls eines weiteren Fahrzeugs an die zentrale Steuerungseinheit weiter.

Die zentrale Steuerungseinheit bestimmt aus der bekannten absoluten Position des stationär angeordneten Sende-Empfangsmoduls, den relativen Positionsdaten der Fahrzeuge (2, 3, 4) und den mittels des jeweiligen Positionsbestimmungsmittels bestimmten Positionsdaten der Fahrzeuge (2, 3, 4) Positionskorrekturen für die jeweiligen Fahrzeuge (2, 3, 4) und sendet diese an die Fahrzeuge (2, 3, 4). Mittels dieser Positionskorrekturen korrigiert das jeweilige Fahrzeug die mittels des Positionsbestimmungsmittels bestimmten Positionsdaten.

Ein Fahrzeug, das nach Ausführung seines Fahrauftrags, also am Fahrziel, außerhalb der Sende-Raumbereiche aller anderen Fahrzeuge und des stationär angeordneten Sende-Empfangsmoduls sich befindet, kehrt selbsttätig an den Startpunkt seines Fahrauftrags zurück. Dazu bestimmt das Fahrzeug seine Position mittels des Positionsbestimmungsmittels und regelt diese Position auf eine Sollposition gemäß Fahrauftrag. Vorzugsweise fährt das Fahrzeug die gleiche Fahrroute, die in seinem vorherigen Fahrauftrag vorgegeben war, in umgekehrter Richtung.

Alternativ hält das Fahrzeug an, sobald es eine Kommunikationsverbindung mit einem anderen Fahrzeug und/oder dem stationär angeordneten Sende-Empfangsmodui aufgebaut hat, und wartet auf einen neuen Fahrauftrag.

Sobald ein Fahrzeug sich länger als die vorgegebene maximale Fahrzeit seines Fahrauftrags außerhalb der Sende-Raumbereiche aller anderen Fahrzeuge und des stationär angeordneten Sende-Empfangsmoduis aufhält, sendet die zentrale Steuerungseinheit einen Fahrauftrag, aufweisend eine zu dem Fahrauftrag des Fahrzeugs identische Fahrroute, an ein weiteres Fahrzeug. Das weitere Fahrzeug folgt dieser Route und stoppt nach Aufbau einer Kommunikationsverbindung mit dem Fahrzeug. Das weitere Fahrzeug empfängt und speichert die Statusinformationen des Fahrzeugs und fährt zurück zum Startpunkt des Fahrauftrags des weiteren Fahrzeugs, wo es die Statusinformationen des Fahrzeugs an die zentrale Steuerungseinheit sendet.

Vorzugsweise erhält ein Fahrzeug einen ersten Fahrauftrag und einen zweiten Fahrauftrag für ein weiteres Fahrzeug von dem stationär angeordneten Sende-Empfangsmodul oder einem in dem Sende-Raumbereich des stationär angeordneten Sende-Raumbereich des stationär angeordneten Sende-Empfangsmoduls sich befindenden ersten Fahrzeug 3. Den ersten Fahrauftrag führt das Fahrzeug aus und den zweiten Fahrauftrag speichert es ab. Sobald das Fahrzeug eine Kommunikationsverbindung zu dem weiteren Fahrzeug aufgebaut hat, leitet es den zweiten Fahrauftrag an das weitere Fahrzeug weiter.

Vorzugsweise weist das System mehr als ein stationär angeordnetes Sende-Empfangsmodul auf, wobei alle stationär angeordneten Sende-Empfangsmodule mit einer einzigen zentralen Steuerungseinheit mittels eines, insbesondere jeweiligen, bidirektionalen Kommunikationskanals verbunden sind.

Die jeweiligen Sende-Raumbereiche der stationär angeordneten Sende-Empfangsmodule sind beabstandet voneinander angeordnet.

Jedes Fahrzeug (2, 3, 4) sucht permanent nach anderen Fahrzeugen (2, 3, 4) oder stationär angeordneten Sende-Empfangsmodulen in den Sende-Raumbereichen seiner Sende-Empfangsmodule, um eine Kommunikationsverbindung aufzubauen. Sobald das jeweilige Fahrzeug (2, 3, 4) eine Kommunikationsverbindung aufgebaut hat, sendet es seine Statusdaten und empfängt die Statusdaten und/oder Fahraufträge der anderen Fahrzeuge (2, 3, 4) beziehungsweise der stationär angeordneten Sende-Empfangsmodule.

### Bezugszeicheniliste

1 Lichtquelle
2 Fahrzeug
3 Fahrzeug
4 Fahrzeug
5 Lichtquelle
6 Lichtquelle
7 Lichtquelle
8 Lichtquelle
9 Lichtquelle
10 Lichtquelle
11 Lichtquelle
12 Lichtquelle
13 Lichtquelle
14 Sendekegel
15 Verfahrfläche
16 Decke

## Patentansprüche

1. Verfahren zum Betreiben, insbesondere zur Steuerung, eines Systems,
wobei das System Fahrzeuge (2, 3, 4), eine zentrale Steuerungseinheit und zumindest ein mittels eines bidirektionalen Kommunikationskanals mit der zentralen Steuerungseinheit verbundenes, stationär angeordnetes Sende-Empfangsmodul, aufweisend einen Sende-Raumbereich, insbesondere Sendekegel (14), aufweist,
wobei jedes Fahrzeug (2, 3, 4) ein jeweiliges Sende-Empfangsmodul aufweist, insbesondere jeweils aufweisend einen jeweiligen Sende-Raumbereich zur bidirektionalen Kommunikation mit dem stationär angeordneten Sende-Empfangsmodul und/oder einem Fahrzeug,
wobei das jeweilige Sende-Empfangsmodul zumindest eine steuerbare Lichtquelle (1, 5, 6, 7, 8, 9, 10, 11, 12, 13) und einen Lichtsensor aufweist, insbesondere eine Lichtquelle (1, 5, 6, 7, 8, 9, 10, 11, 12, 13) von sichtbarem Licht und ein Lichtsensor für sichtbares Licht,
wobei die zentrale Steuerungseinheit mittels des stationär angeordneten Sende-Empfangsmoduls Fahraufträge an die Fahrzeuge (2, 3, 4) sendet,
wobei ein in dem Sende-Raumbereich des stationär angeordneten Sende-Empfangsmoduls sich befindendes erstes Fahrzeug (3) einen Fahrauftrag an ein außerhalb des Sende-Raumbereichs des stationär angeordneten Sende-Empfangsmoduls sich befindendes zweites Fahrzeug (2, 4) weiterleitet,
wobei das zweite Fahrzeug (2, 4) Daten, insbesondere Statusinformationen, mittels des ersten Fahrzeuges (3) und des stationär angeordneten Sende-Empfangsmoduls an die zentrale Steuerungseinheit sendet,
wobei jedes Fahrzeug (2, 3, 4) ein Positionsbestimmungsmittel aufweist, insbesondere aufweisend einen odometrischen Sensor und/oder einen GPS-Sensor, und seine vom Positionsbestimmungsmittel bestimmten Positionsdaten mittels des stationär angeordneten Sende-Empfangsmoduls und/oder des ersten Fahrzeugs (3) an die zentrale Steuerungseinheit sendet,
wobei jedes Fahrzeug (2, 3, 4) die jeweils zu sich selbst relativen Positionsdaten von in seinem Sende-Raumbereich sich befindenden Fahrzeugen bestimmt und diese bestimmten relativen Positionsdaten mittels des stationär angeordneten Sende-Empfangsmoduls an die zentrale Steuerungseinheit sendet,
wobei die zentrale Steuerungseinheit aus den Positionsdaten jedes Fahrzeugs (2, 3, 4), den relativen Positionsdaten der Fahrzeuge (2, 3, 4) und der Position des stationär angeordneten Sende-Empfangsmoduls Positionskorrekturen bestimmt und an die Fahrzeuge (2, 3, 4) sendet,
**dadurch gekennzeichnet, dass**
der Fahrauftrag für ein jeweiliges Fahrzeug (2, 3, 4)
- ein Fahrziel und
- einen Startpunkt und
- eine Fahrroute und
- eine Geschwindigkeit und
- eine Freigabe für einen Streckenabschnitt der Fahrroute und eine maximale Fahrzeit
aufweist,
wobei ein erstes Fahrzeug, das am Fahrziel seines Fahrauftrags außerhalb der Sende-Raumbereiche aller anderen Fahrzeuge (2, 3, 4) und des stationär angeordneten Sende-Empfangsmoduls sich befindet, selbsttätig zu dem Startpunkt seines Fahrauftrags zurückkehrt,
wobei die mittels des Positionsbestimmungsmittels jeweils aktuell bestimmte Istposition des ersten Fahrzeugs auf eine jeweils gemäß Fahrroute aktuelle Sollposition hin geregelt wird,
wobei sobald ein erstes Fahrzeug sich länger als die vorgegebene maximale Fahrzeit seines Fahrauftrags außerhalb der Sende-Raumbereiche aller anderen Fahrzeuge und des stationär angeordneten Sende-Empfangsmoduls aufhält, die zentrale Steuerungseinheit einen Fahrauftrag, aufweisend eine zu dem Fahrauftrag des ersten Fahrzeugs identische Fahrroute, an ein zweites Fahrzeug sendet,
wobei das zweite Fahrzeug nach Aufbau einer Kommunikationsverbindung mit dem ersten Fahrzeug, die Statusinformationen des ersten Fahrzeugs empfängt, speichert, zurück zum Startpunkt des Fahrauftrags des zweiten Fahrzeugs fährt und die Statusinformationen des ersten Fahrzeugs an die zentrale Steuerungseinheit sendet,
wobei das zweite Fahrzeug (2, 4) einen ersten und einen zweiten Fahrauftrag empfängt, wobei das zweite Fahrzeug (2, 4) den ersten Fahrauftrag ausführt und den zweiten Fahrauftrag speichert,
wobei das zweite Fahrzeug (2, 4) nach Aufbau einer Kommunikationsverbindung mit einem weiteren Fahrzeug den zweiten Fahrauftrag an das weitere Fahrzeug sendet.

2. System, das so konfiguriert ist, dass es das Verfahren nach Anspruch 1 ausführt,
wobei
das System Fahrzeuge (2, 3, 4) und zumindest ein stationär angeordnetes Sende-Empfangsmodul, aufweisend einen Sende-Raumbereich, insbesondere Sendekegel (14), aufweist,
wobei jedes Fahrzeug (2, 3, 4) ein jeweiliges erstes Sende-Empfangsmodul, ein jeweiliges zweites Sende-Empfangsmodul und ein jeweiliges Positionsbestimmungsmittel, insbesondere aufweisend einen odometrischen Sensor und/oder einen GPS-Sensor, und/oder einen jeweiligen Abstandssensor, insbesondere einen Radarsensor und/oder einen Ultraschallsensor, aufweist,
wobei das jeweilige Sende-Empfangsmodul zumindest eine steuerbare Lichtquelle (1, 5, 6, 7, 8, 9, 10, 11, 12, 13) und einen Lichtsensor aufweist, insbesondere eine Lichtquelle (1, 5, 6, 7, 8, 9, 10, 11, 12, 13) von sichtbarem Licht und ein Lichtsensor für sichtbares Licht,
wobei jedes Fahrzeug (2, 3, 4) mittels des jeweiligen ersten Sende-Empfangsmoduls zur bidirektionalen Kommunikation mit dem stationären Sende-Empfangsmodul und mittels des jeweiligen zweiten Sende-Empfangsmodul zur bidirektionalen Kommunikation mit den jeweiligen anderen Fahrzeugen (2, 3, 4) mittels deren jeweiligen zweiten Sende-Empfangsmoduls eingerichtet ist,
wobei das System eine zentrale Steuerungseinheit aufweist zur Steuerung der Fahrzeuge (2, 3, 4),
wobei die zentrale Steuerungseinheit mittels zumindest eines bidirektionalen Kommunikationskanals mit dem stationär angeordneten Sende-Empfangsmodul verbunden ist,
wobei die zentrale Steuerungseinheit zum Senden von Fahraufträgen mittels des stationär angeordneten Sende-Empfangsmoduls an ein jeweiliges Fahrzeug (2, 3, 4) eingerichtet ist,
wobei jedes Fahrzeug (2, 3, 4) eine Speichereinheit aufweist, in der Positionsdaten des stationären Sende-Empfangsmoduls und/oder jeweilige Identifikationsinformationen und/oder Positionsdaten der jeweiligen Fahrzeuge (2, 3, 4) gespeichert sind,
wobei die Speichereinheit des jeweiligen Fahrzeuges (2, 3, 4) eingerichtet ist, Fahraufträge für ein weiteres Fahrzeug (2, 3, 4) zu speichern,
wobei das stationär angeordnete Sende-Empfangsmodul oberhalb der Fahrzeuge (2, 3, 4) angeordnet ist,
insbesondere wobei das jeweilige erste Sende-Empfangsmodul eines jeweiligen Fahrzeuges (2, 3, 4) zu dem stationär angeordneten Sende-Empfangsmodul ausgerichtet auf dem jeweiligen Fahrzeug (2, 3, 4) angeordnet ist.

3. System nach Anspruch 2,
**dadurch gekennzeichnet, dass**
das System mehrere voneinander beabstandete stationär angeordnete Sende-Empfangsmodule aufweist, insbesondere wobei die Sende-Raumbereiche der stationär angeordneten Sende-Empfangsmoduie voneinander beabstandet sind,
wobei die stationär angeordneten Sende-Empfangsmodule jeweils mit der zentralen Steuerungseinheit zumindest über einen bidirektionalen Kommunikationskanal verbunden sind.

4. System von Fahrzeugen nach Anspruch 3 oder 2,
**dadurch gekennzeichnet, dass**
ein jeweiliges Fahrzeug (2, 3, 4) zumindest ein drittes Sende-Empfangsmodul aufweist,
wobei das jeweilige dritte Sende-Empfangsmodul zur Kommunikation mit dem jeweiligen zweiten und/oder dritten Sende-Empfangsmodul der anderen Fahrzeuge (2, 3, 4) eingerichtet ist,
insbesondere wobei der Sende-Raumbereich des jeweiligen zweiten Sende-Empfangsmoduls und der Sende-Raumbereich des jeweiligen dritten Sende-Empfangsmoduls gemeinsam einen größeren Raumbereich überdecken als der zweite oder dritte Sende-Raumbereich,
insbesondere wobei das jeweilige zweite Sende-Empfangsmodul in Fahrtrichtung des jeweiligen Fahrzeugs (2, 3, 4) ausgerichtet ist und wobei das jeweilige dritte Sende-Empfangsmodul entgegen der Fahrtrichtung des jeweiligen Fahrzeugs (2, 3, 4) ausgerichtet ist.

## Claims

1. Method for operating, in particular for controlling, a system,
wherein the system comprises vehicles (2, 3, 4), a central control unit and at least one transceiver module, which is connected to the central control unit by means of a bidirectional communication channel, arranged in a stationary manner and comprises a transmission spatial range, in particular a transmission cone (14),
wherein each vehicle (2, 3, 4) comprises a respective transceiver module, each of which in particular comprises a respective transmission spatial range for bidirectional communication with the stationarily arranged transceiver module and/or with a vehicle,
wherein each transceiver module comprises at least one controllable light source (1, 5, 6, 7, 8, 9, 10, 11, 12, 13) and a light sensor, in particular a light source (1, 5, 6, 7, 8, 9, 10, 11, 12, 13) of visible light and a light sensor for visible light,
wherein the central control unit transmits travel instructions to the vehicles (2, 3, 4) by means of the stationarily arranged transceiver module,
wherein a first vehicle (3) located in the transmission spatial range of the stationarily arranged transceiver module relays a travel instruction to a second vehicle (2, 4) located beyond the transmission spatial range of the stationarily arranged transceiver module, wherein the second vehicle (2, 4) transmits data, in particular status information, to the central control unit by means of the first vehicle (3) and the stationarily arranged transceiver module,
wherein each vehicle (2, 3, 4) comprises a position determination means, in particular comprising an odometric sensor and/or a GPS sensor, and transmits its positional data, determined by the position determination means, to the central control unit by means of the stationarily arranged transceiver module and/or of the first vehicle (3),
wherein each vehicle (2, 3, 4) determines the positional data of vehicles located in its spatial transmission range, in each case relative to itself, and transmits these determined relative positional data to the central control unit by means of the stationarily arranged transceiver module,
wherein the central control unit determines position corrections from the positional data of each vehicle (2, 3, 4), the relative positional data of the vehicles (2, 3, 4) and the position of the stationarily arranged transceiver module, and transmits said corrections to the vehicles (2, 3, 4),
**characterised in that**
the travel instruction for each vehicle (2, 3, 4) comprises
- a travel destination and
- a starting point and
- a travel route and
- a speed and
- a release for a track portion of the travel route and a maximum travel time,
wherein a first vehicle which, when at the travel destination of its travel instruction, is located beyond the transmission spatial ranges of all the other vehicles (2, 3, 4) and of the stationarily arranged transceiver module, automatically returns to the starting point of its travel instruction,
wherein the current actual position of the first vehicle, as determined by means of the position determination means, is controlled towards a current target position in accordance with the travel route,
wherein, as soon as a first vehicle stays beyond the transmission spatial ranges of all the other vehicles and of the stationarily arranged transceiver module for a period of time that is longer than the specified maximum travel time in its travel instruction, the central control unit transmits to a second vehicle a travel instruction comprising a travel route that is identical to the travel instruction of the first vehicle,
wherein, once it has established a communications link with the first vehicle, the second vehicle receives the status information of the first vehicle, stores it, travels back to the starting point of the travel instruction of the second vehicle and transmits the status information of the first vehicle to the central control unit,
wherein the second vehicle (2, 4) receives a first and a second travel instruction, wherein the second vehicle (2, 4) executes the first travel instruction and stores the second travel instruction,
wherein, once it has established a communications link is established with a further vehicle, the second vehicle (2, 4) transmits the second travel instruction to the further vehicle.

2. System configured so as to carry out the method according to claim 1,
wherein the system comprises vehicles (2, 3, 4) and at least one transceiver module, which is arranged in a stationary manner and comprises a transmission spatial range, in particular a transmission cone (14),
wherein each vehicle (2, 3, 4) comprises a respective first transceiver module, a respective second transceiver module and a respective position determination means, in particular comprising an odometric sensor and/or a GPS sensor, and/or a respective distance sensor, in particular a radar sensor and/or an ultrasonic sensor,
wherein each transceiver module comprises at least one controllable light source (1, 5, 6, 7, 8, 9, 10, 11, 12, 13) and a light sensor, in particular a light source (1, 5, 6, 7, 8, 9, 10, 11, 12, 13) of visible light and a light sensor for visible light,
wherein each vehicle (2, 3, 4) is set up for bidirectional communication with the stationary transceiver module by means of the respective first transceiver module, and is set up, by means of the respective second transceiver module, for bidirectional communication with the other vehicles (2, 3, 4) by means of their respective second transceiver modules,
wherein the system comprises a central control unit for controlling the vehicles (2, 3, 4), wherein the central control unit is connected to the stationarily arranged transceiver module by means of at least one bidirectional communication channel,
wherein the central control unit is set up to transmit travel instructions to each vehicle (2, 3, 4) by means of the stationarily arranged transceiver module,
wherein each vehicle (2, 3, 4) comprises a memory unit in which positional data of the stationary transceiver module and/or respective identification information and/or positional data of the particular vehicle (2, 3, 4) are stored,
wherein the memory unit of each vehicle (2, 3, 4) is set up to store travel instructions for a further vehicle (2, 3, 4),
wherein the stationarily arranged transceiver module is arranged above the vehicles (2, 3, 4),
in particular wherein the respective first transceiver module of each vehicle (2, 3, 4) is arranged on the particular vehicle (2, 3, 4) in a manner facing the stationarily arranged transceiver module.

3. System according to claim 2,
**characterised in that**
the system comprises a plurality of spaced-apart stationarily arranged transceiver modules, in particular wherein the transmission spatial ranges of the stationarily arranged transceiver modules are spaced apart from one another,
wherein the stationarily arranged transceiver modules are each connected to the central control unit at least by means of a bidirectional communication channel.

4. System of vehicles according to either claim 3 or claim 2,
**characterised in that**
each vehicle (2, 3, 4) comprises at least one third transceiver module,
wherein each third transceiver module is set up for communication with the respective second and/or third transceiver module of the other vehicles (2, 3, 4),
in particular wherein the transmission spatial range of each second transceiver module and the transmission spatial range of each third transceiver module together cover a larger spatial range than the second or third transmission spatial range,
in particular wherein each second transceiver module faces in the direction of travel of the particular vehicle (2, 3, 4) and wherein each third transceiver module faces in the opposite direction to the direction of travel of the particular vehicle (2, 3, 4).

## Revendications

1. Procédé de fonctionnement, en particulier de commande, d'un système,
le système comportant des véhicules (2, 3, 4), une unité de commande centrale et au moins un module émetteur-récepteur qui est disposé de manière fixe, qui est relié à l'unité de commande centrale au moyen d'un canal de communication bidirectionnel et qui comporte une région d'émission spatiale, en particulier un cône d'émission (14),
chaque véhicule (2, 3, 4) comportant un module émetteur-récepteur respectif, en particulier comportant chacun une région d'émission spatiale respective destinée à la communication bidirectionnelle avec le module émetteur-récepteur disposé de manière fixe et/ou un véhicule,
le module émetteur-récepteur respectif comportant au moins une source de lumière commandable (1, 5, 6, 7, 8, 9, 10, 11, 12, 13) et un capteur de lumière, en particulier une source de lumière visible (1, 5, 6, 7, 8, 9, 10, 11, 12, 13) et un capteur de lumière visible,
l'unité de commande centrale envoyant des ordres de conduite aux véhicules (2, 3, 4) au moyen du module émetteur-récepteur disposé de manière fixe,
un premier véhicule (3), situé dans la région d'émission spatiale du module émetteur-récepteur disposé de manière fixe, transmettant un ordre de conduite à un deuxième véhicule (2, 4) situé à l'extérieur de la région d'émission spatiale du module émetteur-récepteur disposé de manière fixe,
le deuxième véhicule (2, 4) envoyant des données, en particulier des informations d'état, à l'unité de commande centrale au moyen du premier véhicule (3) et du module émetteur-récepteur disposé de manière fixe,
chaque véhicule (2, 3, 4} comportant un moyen de détermination de position, comportant notamment un capteur odométrique et/ou un capteur GPS, et envoyant ses données de position, déterminées par le moyen de détermination de position, au moyen du module émetteur-récepteur disposé de manière fixe et/ou du premier véhicule (3) à l'unité de commande centrale,
chaque véhicule (2, 3, 4) déterminant les données de position, relatives à chaque fois à lui-même, de véhicules situés dans sa région d'émission spatiale et émettant ces données de position relatives déterminées à l'unité de commande centrale au moyen du module émetteur-récepteur disposé de manière fixe,
l'unité de commande centrale déterminant des corrections de position à partir des données de position de chaque véhicule (2, 3, 4), des données de position relative des véhicules (2, 3, 4) et de la position du module émetteur-récepteur disposé de manière fixe et les envoyant aux véhicules (2, 3, 4),
**caractérisé en ce que**
l'ordre de conduite d'un véhicule respectif (2, 3, 4) comporte
- une destination et
- un point de départ et
- un itinéraire et
- une vitesse et
- une libération d'une portion de l'itinéraire et un temps de conduite maximal,
un premier véhicule, qui est situé en dehors de la région d'émission spatiale de tous les autres véhicules (2, 3, 4) et du module émetteur-récepteur disposé de manière fixe à la destination de son ordre de conduite, revenant automatiquement au point de départ de son ordre de conduite,
la position réelle du premier véhicule, actuellement déterminée au moyen du dispositif de détermination de position, étant réglée à une position de consigne actuelle en fonction de l'itinéraire,
dès qu'un premier véhicule reste plus longtemps que le temps de conduite maximal spécifié de son ordre de conduite en dehors des régions d'émission spatiale de tous les autres véhicules et du module émetteur-récepteur disposé de manière fixe, l'unité de commande centrale envoyant à un deuxième véhicule un ordre de conduite, comportant un itinéraire de conduite identique à l'ordre de conduite du premier véhicule,
après avoir établi une liaison de communication avec le premier véhicule, le deuxième véhicule recevant et mémorisant les informations d'état du premier véhicule et revenant au point de départ de l'ordre de conduite du deuxième véhicule et envoyant les informations d'état du premier véhicule à l'unité de commande centrale,
le deuxième véhicule (2, 4) recevant un premier et un deuxième ordre de conduite, le deuxième véhicule (2, 4) exécutant le premier ordre de conduite et mémorisant le deuxième ordre de conduite,
le deuxième véhicule (2, 4) envoyant le deuxième ordre de conduite à l'autre véhicule après avoir établi une liaison de communication avec un autre véhicule.

2. Système conçu pour mettre en œuvre le procédé selon la revendication 1,
le système comportant des véhicules (2, 3, 4) et au moins un module émetteur-récepteur qui est disposé de manière fixe et qui comporte une région d'émission spatiale, en particulier un cône d'émission (14),
chaque véhicule (2, 3, 4) comportant un premier module émetteur-récepteur respectif, un deuxième module émetteur-récepteur respectif et un moyen de détermination de position respectif, en particulier comportant un capteur odométrique et/ou un capteur GPS, et/ou un capteur de distance respectif, notamment un capteur radar et/ou un capteur à ultrasons,
le module émetteur-récepteur respectif comportant au moins une source de lumière commandable (1, 5, 6, 7, 8, 9, 10, 11, 12, 13) et un capteur de lumière, en particulier une source de lumière visible (1, 5, 6, 7, 8, 9, 10, 11, 12, 13) et un capteur de lumière visible, chaque véhicule (2, 3, 4) étant adapté, au moyen du premier module émetteur-récepteur respectif, à une communication bidirectionnelle avec le module émetteur-récepteur disposé de manière fixe et, au moyen du deuxième module émetteur-récepteur respectif, à une communication bidirectionnelle avec les autres véhicules respectifs (2, 3, 4) au moyens de leur deuxième module émetteur-récepteur respectif,
le système comportant une unité de commande centrale destinée à commander les véhicules (2, 3, 4),
l'unité de commande centrale étant reliée au module émetteur-récepteur disposé de manière fixe au moyen d'au moins un canal de communication bidirectionnel,
l'unité de commande centrale étant adaptée pour envoyer des ordres de conduite à un véhicule respectif (2, 3, 4) au moyen du module émetteur-récepteur disposé de manière fixe,
chaque véhicule (2, 3, 4) comportant une unité de mémorisation dans laquelle des données de position du module émetteur-récepteur disposé de manière fixe et/ou des informations d'identification et/ou des données de position respectives des véhicules respectifs (2, 3, 4) sont mémorisées,
l'unité de mémorisation du véhicule respectif (2, 3, 4) étant adaptée pour mémoriser des ordres de conduite d'un autre véhicule (2, 3, 4),
le module émetteur-récepteur disposé de manière fixe étant disposé au-dessus des véhicules (2, 3, 4),
en particulier le premier module émetteur-récepteur respectif d'un véhicule respectif (2, 3, 4) étant disposé sur le véhicule respectif (2, 3, 4) en étant orienté vers le module émetteur-récepteur disposé de manière fixe.

3. Système selon la revendication 2,
**caractérisé en ce que**
le système comporte une pluralité de modules émetteurs-récepteurs qui sont disposés de manière fixe et qui sont espacés les uns des autres, en particulier les régions d'émission spatiale des modules émetteurs-récepteurs disposés de manière fixe étant espacées les unes des autres,
les modules émetteurs-récepteurs disposés de manière fixe étant chacun reliés à l'unité de commande centrale au moins par le biais d'un canal de communication bidirectionnel.

4. Système de véhicules selon la revendication 3 ou 2, **caractérisé en ce que**
un véhicule respectif (2, 3, 4) comporte au moins un troisième module émetteur-récepteur,
le troisième module émetteur-récepteur respectif étant adapté pour communiquer avec le deuxième et/ou troisième module émetteur-récepteur respectif des autres véhicules (2, 3, 4),
en particulier la région d'émission spatiale du deuxième module émetteur-récepteur respectif et la région d'émission spatiale du troisième module émetteur-récepteur respectif couvrant conjointement une région spatiale plus grande que la deuxième ou la troisième région d'émission spatiale,
en particulier le deuxième module émetteur-récepteur respectif étant orienté dans la direction de conduite du véhicule respectif (2, 3, 4) et le troisième module émetteur-récepteur respectif étant orienté à l'opposé de la direction de conduite du véhicule respectif (2, 3, 4).
